# EUROPÄISCHE PATENTSCHRIFT

(11) **EP 3 281 076 B1**
(45) Veröffentlichungstag und Bekanntmachung des Hinweises auf die Patenterteilung: **12.06.2019**
(21) Anmeldenummer: 16718214.6
(22) Anmeldetag: 04.04.2016
(51) Int. Cl.: G05D 1/02

(54) **VERFAHREN ZUR BEARBEITUNG EINES BODENS**
METHOD FOR PROCESSING A FLOOR
PROCÉDÉ DE TRAITEMENT D'UN SOL

(30) Priorität: 07.04.2015 DE 102015105211
(43) Veröffentlichungstag der Anmeldung: 14.02.2018
(73) Patentinhaber: Vorwerk & Co. Interholding GmbH, 42275 Wuppertal (DE)
(72) Erfinder: HILLEN, Lorenz, 42287 Wuppertal (DE); MEGGLE, Martin, 33442 Herzebrock (DE)
(74) Vertreter: Müller, Enno
(86) Internationale Anmeldenummer: PCT/EP2016/057346
(87) Internationale Veröffentlichungsnummer: WO 2016/162305

(56) Entgegenhaltungen:
- EP-A2- 0 363 339
- EP-A2- 2 407 847
- WO-A1-2010/114235
- GB-A- 2 509 814
- R Siegwart: "introduction to autonomous mobile robots", , 1. Januar 2004 (2004-01-01), XP055054850, Massachusetts ISBN: 978-0-26-219502-7 Gefunden im Internet: URL:http://www.ee.ui.ac.id/muis/course_fil e/robotics/Introduction_to_Autonomous_Mobi le_Robots.pdf [gefunden am 2013-02-28]

## Beschreibung

Die Erfindung betrifft ein Verfahren zur Bearbeitung, insbesondere zur Reinigung, eines Bodens eines Raumes mittels eines selbsttätig verfahrbaren Bearbeitungsgerätes, wobei eine Karte des Raumes erstellt und einem Nutzer des Bearbeitungsgerätes angezeigt wird, wobei der Nutzer in der erstellten Karte zumindest einen Teilbereich des Raumes auswählen kann, in welchem das Bearbeitungsgerät eine Bearbeitung des Bodens durchführen oder unterlassen soll, wobei die Karte des Raumes aus dreidimensionalen Koordinaten eines Weltkoordinatensystems erstellt wird, wobei jedem Punkt einer Vielzahl von Punkten des Raumes und/ oder eines in dem Raum angeordneten Hindernisses eine dreidimensionale Koordinate innerhalb des Weltkoordinatensystems zugeordnet wird.

Verfahren der vorgenannten Art sind im Stand der Technik hinreichend bekannt. Das insbesondere zur Reinigung verwendete Bearbeitungsgerät fährt selbsttätig nach einer vorprogrammierten Fahr- und gegebenenfalls Bearbeitungsstrategie. In diesem Zusammenhang ist es bekannt, dass das Bearbeitungsgerät über eine Karte oder kartenartige Darstellung des zu bearbeitenden Raumes, gegebenenfalls über mehrere Karten für entsprechend mehrere Räume, verfügt. Diese Karte ist bevorzugt in einem nichtflüchtigen Datenspeicher abgelegt. In der Karte oder kartenartigen Darstellung des Raumes sind insbesondere die Positionsdaten von Hindernissen, beispielsweise Begrenzungswänden oder auch Möbeln, vermerkt.

Zur Erstellung der Karte ist es bekannt, das Bearbeitungsgerät im Rahmen einer Lernfahrt zu verfahren. Ebenso kann die Karte auch im Zuge einer Bearbeitungsfahrt erstellt oder ergänzt werden.

Im Stand der Technik sind unterschiedliche Mittel zur Erfassung des Raumes bekannt. Die DE 10 2008 014 912 A1 offenbart beispielsweise ein Reinigungsgerät mit einem Rundum-Scanner zur Hindernisdetektion. Die Hindernisdetektion basiert auf einem optischen Triangulationsverfahren, welches Abstände zu Hindernissen misst.

Die Druckschrift EP 2407847 A2 offenbart beispielsweise ein selbsttätig verfahrbares Gerät sowie ein Verfahren zur Orientierung eines solchen Gerätes, bei welchem eine zweidimensionale Karte aus Messwerten einer Rundum- Abstandsmessung eines Abstandssensors erstellt wird, wobei weitere Angaben, die der Einteilung der 2D-Karte in Teilgebiete dienen, ergänzt werden. Die weiteren Angaben sind beispielsweise gemessene Deckenhöhen, die zur Identifikation von Raumübergangen dienen und somit die Interpretation der Karte für einen Nutzer erleichtern.

Des Weiteren ist es im Stand der Technik auch bekannt, Karten aus mosaikartig zusammengesetzten Bildern zu erstellen, die mittels einer an dem Reinigungsgerät angeordneten Kamera aufgenommen wurden.

Obwohl mit den bekannten Verfahren eine Karte des Raumes erstellt werden kann, ist diese für den Nutzer schwer zu lesen. Dies liegt daran, dass die Hindernisse aus der Perspektive des Bearbeitungsgerätes dargestellt werden. Diese Perspektive ist üblicherweise nicht identisch mit der Perspektive des Nutzers, welcher beispielsweise nicht nur die Beine eines Tisches als Hindernis wahrnimmt, sondern vielmehr den Tisch als Ganzes, das heißt auch die Tischplatte. Insofern kann sich der Nutzer in einer Karte, in welcher lediglich die Tischbeine als Hindernisse eingezeichnet sind, schwer orientieren.

Es ist daher Aufgabe der Erfindung, ein Verfahren zur Bearbeitung eines Bodens zu schaffen, bei welchem die erstellte Karte des Raumes für den Nutzer einfacher zu lesen ist.

Zur Lösung schlägt die Erfindung vor, dass die Karte als zweidimensionale Karte mit kodierten, insbesondere farbkodierten, Höheninformationen angezeigt wird, wobei die Höheninformation eine Höheninformation eines Hindernisses ist, und wobei sich die Kodierungen unterschiedlich hoher Hindernisse unterscheiden.

Im Gegensatz zum Stand der Technik wird nun mit dem erfindungsgemäßen Verfahren eine Karte aus dreidimensionalen Koordinaten eines Weltkoordinatensystems erstellt, welche die tatsächlichen Abmessungen eines Hindernisses, inklusive dessen Höhe, darstellt. Somit ist der Raum nicht aus der Perspektive des die Karte erstellenden Bearbeitungsgerätes dargestellt, sondern vielmehr perspektivenunabhängig. Dadurch ist es dem Nutzer des Bearbeitungsgerätes besonders einfach möglich, die reale Raumsituation anhand der in der Karte dargestellten Hindernisse wiederzuerkennen und eine schnelle und sichere Auswahl der von der Bearbeitung auszusparenden oder für eine Bearbeitung zu berücksichtigenden Teilbereiche des Raumes zu treffen. Insofern wird eine Karte geschaffen, die sowohl zur Navigation des Bearbeitungsgerätes innerhalb des Raumes beziehungsweise innerhalb mehrerer Räume, als auch zur benutzerfreundlichen, unkomplizierten Interaktion durch einen Nutzer des Bearbeitungsgerätes verwendet werden kann. Vorteilhaft wird die Karte als zweidimensionale Karte mit kodierten, insbesondere farbkodierten, Höheninformationen angezeigt. Der Aufbau dieser Karte erfordert dabei eine Diskretisierung der dreidimensionalen Koordinaten und die Projektion auf die Ebene des Bodens des Raumes. Je nach dem Abstand der entsprechenden Koordinaten zu dieser Bodenebene können die Hindernisse in unterschiedliche Klassen gruppiert werden. Eine erste Klasse kann beispielsweise bodennahe Hindernisse enthalten, die von dem Bearbeitungsgerät nicht unterfahren werden können. Diese Hindernisse haben eine Elevation kleiner oder gleich der Höhe des Bearbeitungsgerätes. Solche Hindernisse werden in der Karte mit einer ersten Farbe dargestellt. Eine zweite Klasse beinhaltet die unterfahrbaren Hindernisse. Solche Hindernisse können von dem Bearbeitungsgerät unterfahren werden und haben eine Elevation größer als die Höhe des Bearbeitungsgerätes. Diesen Hindernissen wird in der Karte eine zweite Farbe zugewiesen. Eine dritte Klasse von Hindernissen beinhaltet Übergänge zwischen einer Wand des Raumes und einer Raumdecke. Diese Übergänge sind durch eine sehr große und in der Regel über den Raum konstante Elevation gekennzeichnet. Diesen Hindernissen wird eine dritte Farbe zugeordnet. Durch diese farbliche Kodierung der Hindernisse ergibt sich für den Nutzer eine hilfreiche Zusatzinformation innerhalb der zweidimensional dargestellten Karte, die es ihm ermöglicht, auch die dritte Dimension der Hindernisse zu erkennen und sich somit in der Karte zurecht zu finden. Alternativ zu der Farbkodierung können ebenfalls andere Kodierungen verwendet werden, beispielsweise die Verwendung von geometrischen Symbolen (Dreiecke, Kreise usw.) oder die Hinzufügung von Ziffern als Höhenangaben.

Es wird vorgeschlagen, dass der Raum mittels eines an dem Bearbeitungsgerät angeordneten dreidimensional schwenkbaren Laserdistanzsensors vermessen wird. Der Laserdistanzsensor kann insbesondere ein Triangulationssensor sein, welcher die Abstände zu Hindernissen, wie beispielsweise Möbeln oder Wänden, mittels eines Triangulationsverfahrens aus unterschiedlichen Abständen zu dem Hindernis misst. Erfindungsgemäß weist der Laserdistanzsensor dabei nicht nur eine einzige Messebene auf. Stattdessen ist der Laserdistanzsensor dreidimensional innerhalb des zu vermessenden Raumes schwenkbar, so dass auch die Höhe von Hindernissen ermittelt werden kann.

Darüber hinaus wird vorgeschlagen, dass der Raum mittels einer an dem Bearbeitungsgerät angeordneten Kamera vermessen wird. Eine solche Kamera ist vorteilhaft eine digitale Kamera, welche einen CCD-Chip oder CMOS-Chip aufweist. Die Kamera kann die aufgenommen digitalen Bilder zur Auswertung an eine Auswerteeinrichtung übertragen, in welcher die Bilder im Hinblick auf Hindernisse ausgewertet werden. Die Kamera kann entweder in Alleinstellung oder auch in Kombination mit einem Laserdistanzsensor zur Vermessung des Raumes verwendet werden. Dabei kann die Karte durch die Kombination der Daten des Laserdistanzsensors und der Daten der Kamera erstellt werden. Beispielsweise kann der Laserdistanzsensor lediglich Abstände zu Hindernisses innerhalb einer horizontalen Ebene des Raumes messen, während die Kamera in Bezug auf eine vertikale Ebene die Höhe der Hindernisse misst. Die Messwerte können zu dreidimensionalen Koordinaten eines Weltkoordinatensystems kombiniert werden. Insofern stellt diese Lösung eine Alternative zu der vorgenannten Messung mittels eines dreidimensional schwenkbaren Laserdistanzsensors dar.

Des Weiteren wird vorgeschlagen, dass ein erstes Bild der Kamera von einer ersten Raumposition des Bearbeitungsgerätes aus aufgenommen wird, und dass ein zweites Bild von einer zweiten Raumposition des Bearbeitungsgerätes aus aufgenommen wird, wobei in dem ersten Bild und dem zweiten Bild enthaltene Bilddaten, insbesondere mittels einer Kantendetektion, auf eine Vielzahl von Punkten und/oder Linien reduziert werden. Während einer Lernfahrt und/oder Bearbeitungsfahrt des Bearbeitungsgerätes können in regelmäßigen Abständen, zeitlich und/oder räumlich, Bilder mittels der Kamera aufgenommen werden. Dabei wird ein erstes Bild von einer ersten Raumposition aus, ein zweites Bild von einer zweiten Raumposition aus, ein drittes Bild von einer dritten Raumposition aus, und so weiter, aufgenommen. Dadurch ergibt sich eine Serie von Bildern, welche den Raum möglichst vollständig abbildet und somit die Erstellung einer lückenlosen Karte ermöglicht.

Alternativ zu der Aufnahme von Bildern von einer ersten und einer zweiten Raumposition aus, kann eine Stereovisionskamera verwendet werden, welche an einer Raumposition zwei Bilder aus zueinander unterschiedlichen Blickwinkeln aufnimmt. Dadurch ist es ohne einen Wechsel der Raumposition des Bearbeitungsgerätes möglich, die Raumposition zu berechnen und dazu dreidimensionale Koordinaten zu bestimmen. Die blickwinkelabhängigen Unterschiede der Bilddaten der beiden korrespondierenden Bilder sind durch die konkrete Ausbildung und Anordnung der Stereovisionskamera auf dem Bearbeitungsgerät vorgegeben und somit konstant. Daher ist es gegenüber einer Messung von zwei aufeinanderfolgenden Raumpositionen aus nicht erforderlich, eine Änderung der Raumposition aus Messwerten zu ermitteln, welche grundsätzlich Messfehler aufweisen können.

Darüber hinaus kann die Vermessung des Raumes alternativ auch mit einer Tiefenkamera erfolgen, welche ein regelmäßiges Messgitter aufweist. Dieses Messgitter wird im sichtbaren oder unsichtbaren Spektralbereich des Lichtes in den Detektionsbereich der Kamera projiziert und von den im Detektionsbereich befindlichen Hindernissen reflektiert. Das reflektierte Signal ist abhängig von der räumlichen Anordnung und Geometrie des Hindernisses verzerrt, so dass anhand der darin enthaltenen Tiefeninformation Rückschlüsse auf die räumliche Orientierung und Position des Hindernisses gezogen werden können. Daraus kann wiederum eine dreidimensionale Koordinate innerhalb des Weltkoordinatensystems ermittelt werden.

Um nun in einem nachfolgenden Arbeitsschritt Übereinstimmungen zwischen aufeinanderfolgenden Bildern berechnen zu können, werden zunächst markante Merkmale wie beispielsweise Linien, Kanten oder Punkte, innerhalb der Bilder gesucht. Dabei können Übereinstimmungen sowohl zwischen unmittelbar aufeinanderfolgenden Bildern ermittelt werden, als auch zwischen zeitlich und/ oder räumlich weiterauseinanderliegenden Bildern. Erfindungsgemäß werden die in den Bildern enthaltenen Informationen auf eine Vielzahl von Punkten und/oder Linien reduziert. Üblicherweise werden in der Bildverarbeitung Punktfeatures ausgewertet, zum Beispiel mittels einer skaleninvarianten Merkmalstransformation (SIFT) oder mittels sogenannter "Speeded Up Robust Features" (SURF). Vorteilhaft ist jedoch auch die Auswertung von Linien beziehungsweise Kanten innerhalb des Bildes. Dabei werden zunächst beliebige Kanten (Kontrastübergänge) im Bild detektiert. Dies kann zum Beispiel mittels eines Canny-Algorithmus geschehen. In einem nachfolgenden Schritt werden die so detektierten Kanten auf Liniensegmente reduziert. Dazu wird üblicherweise die Hough-Transformation oder Varianten davon, beispielsweise probabilistische Hough-Transformation, angewendet. Die Reduzierung der Bilder auf eine Vielzahl Linien erfolgt für das erste Bild und das zweite Bild, beziehungsweise für weitere Bilder, gleichermaßen. Anschließend erfolgt ein Vergleich (Matching) der in den Bildern gefundenen Linien beziehungsweise der Anfangs- und Endpunkte, um Übereinstimmungen festzustellen. Üblicherweise erfolgt dies durch eine Plausibilitätsprüfung kombiniert mit dem sogenannten RANSAC-Algorithmus (Random Sample Consensus). Die Qualität der gefundenen Übereinstimmungen wird durch Eliminierung fehlerhafter "Übereinstimmungen" erhöht.

Um nun die dreidimensionalen Koordinaten innerhalb des Weltkoordinatensystems bestimmen zu können, schlägt die Erfindung vor, dass die reduzierten Bilddaten des ersten Bildes und des zweiten Bildes miteinander verglichen werden, wobei anhand eines von dem Bearbeitungsgerät zurückgelegten Abstandes zwischen der ersten Raumposition und der zweiten Raumposition für jeden Punkt und/oder jede Linie eine dreidimensionale Koordinate des Weltkoordinatensystems berechnet wird. Die Bestimmung der Raumpositionen selbst kann dabei mittels eines Lokalisationsverfahrens erfolgen, welches üblicherweise ohnehin zur Navigation des Bearbeitungsgerätes innerhalb des Raumes benötigt wird. Die von dem Bearbeitungsgerät zurückgelegten Strecken, das heißt beispielsweise der Abstand zwischen der ersten Raumposition und der zweiten Raumposition des Bearbeitungsgerätes, können beispielsweise mittels Odometrie oder Vektorsubtraktion berechnet werden. Die Kombination der Bilddaten mit der Information über den zwischen den beiden Raumpositionen zurückgelegten Abstand ermöglicht die Berechnung einer dreidimensionalen Koordinate des Weltkoordinatensystems für jeden Punkt insbesondere jeden Anfangs- und Endpunkt einer Linie. Um die Koordinaten eines Punktes mit besonders großer Genauigkeit berechnen zu können, können die vorgenannten Verfahrensschritte mehrmals mit unterschiedlichen Bildpaaren durchgeführt werden. So können beispielsweise nicht nur das erste und zweite Bild einer Bildserie miteinander verglichen werden, sondern beispielsweise auch das erste und das dritte Bild, das erste und das vierte Bild und so weiter. Die berechneten Koordinaten können durch Mittelung oder durch Fusionierungsverfahren, beispielsweise einen Kalman-Filter, zusammengeführt werden.

Des Weiteren kann der Abstand zwischen der ersten Raumposition und der zweiten Raumposition mittels eines an dem Bearbeitungsgerät angeordneten Laserdistanzsensors, insbesondere eines Triangulationssensors, ermittelt werden. In üblicher Weise kann dabei ein an dem Bearbeitungsgerät vorhandener Laserdistanzsensor genutzt werden, um ausgehend von einer bekannten ersten Raumposition den Abstand zu einer zweiten Raumposition zu ermitteln. Insofern können die Messungen eines Laserdistanzsensors im Sinne der Erfindung vorteilhaft mit den Bildern der Kamera kombiniert werden.

Es wird vorgeschlagen, dass die Karte als Gitterkarte oder Linienkarte angezeigt wird. Dabei werden die dreidimensionalen Koordinaten des Weltkoordinatensystems in eine zweidimensionale Karte des Raumes beziehungsweise der Räume überführt. Die Hindernisse können dabei innerhalb eines Gitters dargestellt werden. Des Weiteren ist es möglich, dass die Konturen der Hindernisse durch Linien dargestellt werden.

Des Weiteren wird vorgeschlagen, dass die Karte des Raumes mittels einer Auswerteeinrichtung des Bearbeitungsgerätes erstellt wird. Insofern erfolgt sowohl die Detektion der Hindernisse als auch die Auswertung der gemessenen Raumkoordinaten vorteilhaft mittels einer Einrichtung des Bearbeitungsgerätes, nämlich einem Laserdistanzsensor und/oder einer Kamera. Eine Datenübermittlung von dem Bearbeitungsgerät an eine externe Auswerteeinrichtung ist nicht erforderlich.

Alternativ kann vorgesehen sein, dass die Karte des Raumes mittels einer Auswerteeinrichtung eines in Datenverbindung mit dem Bearbeitungsgerät stehenden mobilen Endgerätes und/ oder mittels einer in ein Datenkommunikationsnetzwerk eingebundenen Auswerteeinrichtung erstellt wird. Gemäß dieser Verfahrensführung wird eine externe Auswerteeinrichtung zur Erstellung der Karte genutzt, so dass das Bearbeitungsgerät selbst keine solche Auswerteeinrichtung aufweisen muss.

Schließlich kann die Anzeige der erstellten Karte entweder auf einem Display des Bearbeitungsgerätes selbst oder auch auf einem Display eines externen Gerätes angezeigt werden. Beispielsweise kann das externe Gerät ein mobiles Endgerät des Nutzers sein, insbesondere ein Mobiltelefon oder ein Laptop. Alternativ kann die Karte auch auf einem Fernseher oder anderen Haushaltsgeräten angezeigt werden.

Im Folgenden wird die Erfindung anhand eines Ausführungsbeispiels näher erläutert. Es zeigen:
- Fig. 1: einen Teilbereich eines Raumes mit einem selbsttätig verfahrbaren Bearbeitungsgerät
- Fig. 2: eine Vermessung des Raumes mittels des Bearbeitungsgerätes von zwei aufeinanderfolgenden Raumpositionen aus,
- Fig. 3: eine erstellte Karte eines Raumes.

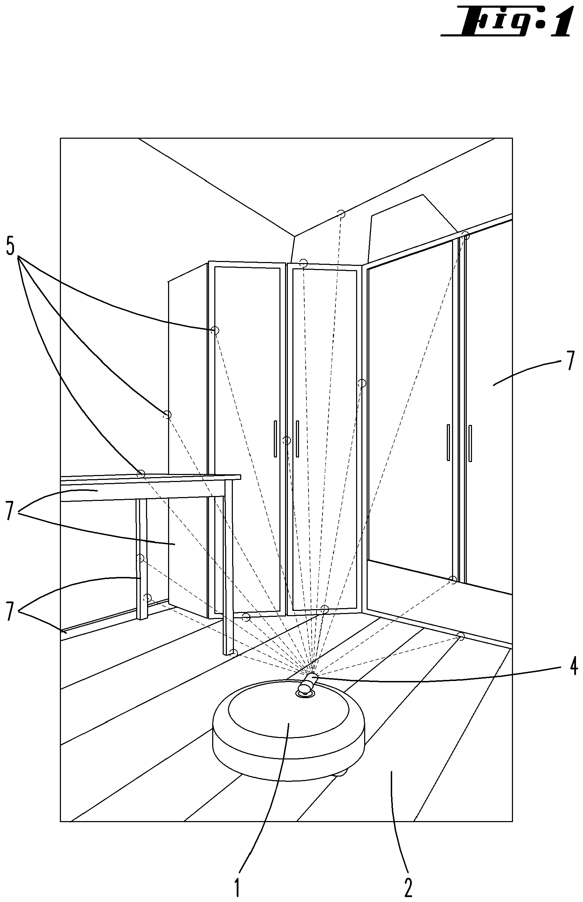

Die in Figur 1 dargestellte Situation zeigt ein selbsttätig verfahrbares Bearbeitungsgerät 1, hier beispielsweise ein Saugroboter, auf einem zu reinigenden Boden 2 eines Raumes. Das Bearbeitungsgerät 1 verfügt über eine Kamera 4, welche in Hauptverfahrrichtung des Bearbeitungsgerätes 1 angeordnet ist, so dass der vor dem Bearbeitungsgerät 1 liegende Teil des Raumes vermessen werden kann. Der dargestellte Raumausschnitt umfasst mehrere Hindernisse 7, nämlich Wände, Fußleisten, einen Tisch sowie Schränke. Hindernisse 7 können jede Art von Gegenständen sein, insbesondere solche, welche von dem Bearbeitungsgerät 1 nicht unterfahrbar sind, da diese einen Abstand zum Boden 2 aufweisen, der geringer ist als die Höhe des Bearbeitungsgerätes 1. Ein Nutzer (nicht dargestellt) kann über ein in Kommunikationsverbindung mit dem Bearbeitungsgerät 1 stehendes Endgerät verfügen, beispielsweise ein Mobiltelefon, auf welchem eine von dem Raum erstellte Karte 3 angezeigt wird.

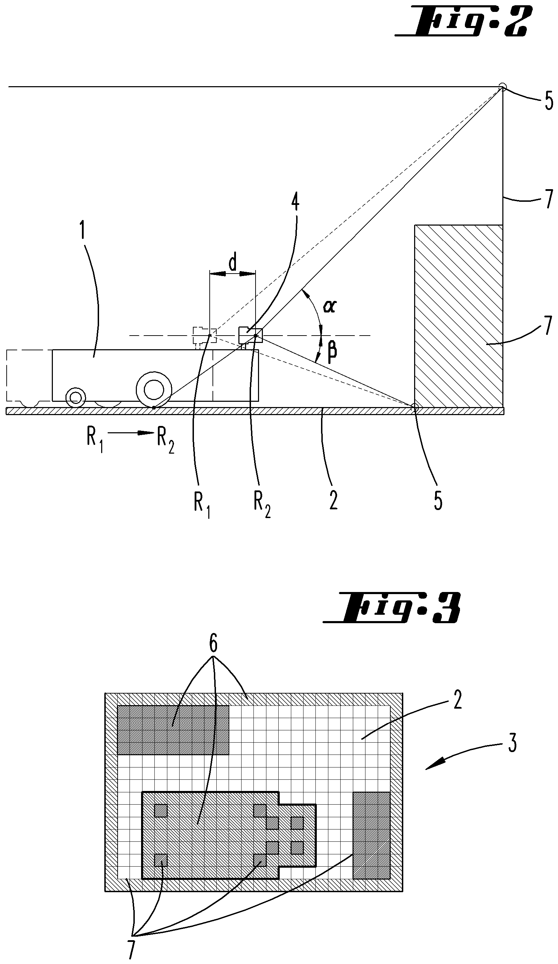

Figur 2 zeigt das Bearbeitungsgerät 1 während einer Vermessung zweier Hindernisse 7 (Wand, Schrank) von zwei verschiedenen Raumpositionen aus, nämlich einer ersten Raumposition R₁ und einer zweiten Raumposition R₂. Eine erste Messung findet dabei von der Raumposition R₁ aus statt. Eine zweite Messung wird von der Position R₂ aus durchgeführt, welche von der ersten Raumposition R₁ um einen Abstand d versetzt ist.

Figur 3 zeigt eine erstellte Karte 3 eines Raumes, welche Höheninformationen 6 über die Hindernisse 7 aufweist, wobei die Höheninformationen 6 farblich kodiert sind. Der Boden 2 sowie jeweils auch die unterschiedlich hohen Hindernisse 7 sind dabei in unterschiedlichen Farben dargestellt.

Die Erfindung funktioniert nun so, dass das Bearbeitungsgerät 1 während einer Lernfahrt, das heißt ohne gleichzeitige Bearbeitung des Bodens 2, oder auch während einer Bearbeitungsfahrt durch den Raum fährt und mittels der Kamera 4 Bilder des Raumes von unterschiedlichen Raumpositionen R₁, R₂ aus aufnimmt. In Figur 1 ist die Situation anhand der ersten Raumposition R₁ des Bearbeitungsgerätes 1 dargestellt. Ein ebensolches Bild wird auch in Bezug auf die zweite Raumposition R₂ aufgenommen, welche um den Abstand d von der ersten Raumposition R₁ entfernt ist. Dieser Verfahrensschritt beinhaltet beispielsweise auch eine Verzerrungskorrektur der mit der Kamera 4 aufgenommenen Bilder, um zum Beispiel Objektivverzerrungen zu korrigieren. Während der Lernfahrt oder auch Bearbeitungsfahrt des Bearbeitungsgerätes 1 werden Bilder in regelmäßigen oder unregelmäßigen örtlichen Abständen d aufgenommen. Ebenso kann es alternativ oder zusätzlich auch vorgesehen sein, dass die Bilder einen bestimmten zeitlichen Abstand zueinander aufweisen. Insgesamt ergibt sich somit eine Reihe von Bildern (Bildserie), welche von unterschiedlichen Raumpositionen R₁, R₂ bis hin zu Rₙ aufgenommen wurden.

Anschließend werden Übereinstimmungen in den nacheinander aufgenommenen Bildern gesucht. Dafür werden zunächst Kanten innerhalb der Bilder detektiert. Diese Kanten sind beispielsweise Kanten der Tischbeine des Tisches, der Tischplatte, Kanten des Schrankes, Wand-Decken-Übergänge und so weiter. Die Kantendetektion kann beispielsweise durch einen Canny-Algorithmus durchgeführt werden. Die detektierten Kanten der Hindernisse 7 werden dann auf gerade Liniensegmente reduziert. Hierzu kann beispielsweise eine probabilistische Hough-Transformation verwendet werden. Ausgehend von den so erhaltenen geraden Linien werden dann Übereinstimmungen zwischen den Bildern berechnet. Die Bilder können entweder Bilder von zwei direkt aufeinanderfolgenden Raumpositionen R₁, R₂ oder auch Bilder von nicht direkt aufeinanderfolgenden Raumpositionen, beispielsweise R₁ und Rₙ sein. Zur Bestimmung von Übereinstimmungen werden insbesondere Punkte 5, beispielsweise Anfangs- und Endpunkte der Linien herangezogen. Dies ist beispielsweise mittels eines SIFT- oder SURF-Verfahrens möglich.

Die Berechnung der dreidimensionalen Koordinate wird in Figur 2 am Beispiel eines Wand-Decken-Übergangs und eines Boden-Hindernis-Übergangs dargestellt. Um die Koordinaten dieser Punkte 5 zu berechnen, wird von zwei aufeinanderfolgenden Raumpositionen R₁, R₂ aus jeweils ein Bild mittels der Kamera 4 aufgenommen. Die Koordinaten der ersten Raumposition R₁ beziehungsweise der zweiten Raumposition R₂ des Bearbeitungsgerätes 1 (beziehungsweise der Kamera 4) sind bekannt, beispielsweise über ein Lokalisationsverfahren, welches regelmäßig zur Navigation des Bearbeitungsgerätes 1 eingesetzt wird. Die Ermittlung des Abstandes d zwischen der ersten Raumposition R₁ und der zweiten Raumposition R₂ kann mittels Odometrie oder Vektorsubtraktion berechnet werden. Ausgehend von den Raumpositionen R₁ und R₂ werden Winkel α, β zwischen einer parallel zu dem Boden 2 verlaufenden Ebene und den Punkten 5 an den Übergängen Wand/Decke beziehungsweise Boden/Schrank gemessen. Aus dem Betrag des Abstandes d zwischen den beiden Raumpositionen R₁, R₂ und den Winkeln α, β für jede der Raumpositionen R₁, R₂ können die Koordinaten in Bezug auf die Raumposition R₁, R₂ der Kamera 4 berechnet werden. Da die Raumposition R₁, R₂ der Kamera 4 bekannt ist, können auch die dreidimensionalen Koordinaten der Punkte 5 an den zuvor genannten Übergängen berechnet werden. Um die Berechnung der Koordinaten eines Punktes 5 zu verbessern, können die vorgenannten Schritte mehrmals mit unterschiedlichen Bildpaaren durchlaufen werden. So können beispielsweise nicht nur das zuletzt aufgenommene Bild und dessen Vorgänger miteinander verglichen werden, sondern beispielsweise auch das zuletzt aufgenommene Bild und dessen Vorvorgänger. Jeder dieser Vergleiche führt zu einer Berechnung der dreidimensionalen Koordinate. Diese Ergebnisse werden dann durch Mittelung oder durch Fusionierungsverfahren, beispielsweise einem Kalman-Filter, zusammengeführt.

Schließlich werden die dreidimensionalen Koordinaten der Punkte 5 in eine Karte 3 der Umgebung des Bearbeitungsgerätes 1 eingetragen. Aus diesen dreidimensionalen Koordinaten kann anschließend beispielsweise eine zweidimensionale Gitterkarte, wie in Figur 3 dargestellt, erstellt werden. Der Aufbau der Karte 3 beinhaltet eine Diskretisierung der dreidimensionalen Koordinaten der Punkte 5 und die Projektion dieser Punkte 5 in die Grundebene des Bodens 2. Je nach dem Abstand des Punktes 5 zu dem Boden 2 (Elevation des Punktes) wird dieser in unterschiedliche Klassen eingruppiert. In der Karte 3 sind bodennahe Hindernisse 7, die nicht von dem Bearbeitungsgerät 1 unterfahren werden können, dunkelgrau dargestellt. Diese Hindernisse 7 haben eine Elevation kleiner oder gleich der Höhe des Bearbeitungsgerätes 1. Unterfahrbare Hindernisse 7 sind in der Karte 3 mittelgrau dargestellt. Diese haben eine Elevation größer als die Höhe des Bearbeitungsgerätes 1. Es kann sich hierbei beispielsweise um eine Tischplatte handeln. Schließlich sind Hindernisse 7 mit einer sehr großen und in der Regel über den ganzen Raum konstanten Elevation hellgrau eingezeichnet. Diese Hindernisse 7 sind beispielsweise Wände. Durch diese Klassifizierung der Punkte 5 ergibt sich eine Karte 3, die dem Nutzer eine möglichst realitätsgetreue Abbildung des Raumes liefert.

Die Karte 3 kann dem Nutzer nun auf beispielsweise einem mobilen Endgerät, wie einem Smartphone, einem Tablet oder einem Laptop angezeigt werden. Dazu wird die Karte 3 von dem Bearbeitungsgerät 1 an das Endgerät übertragen, beispielsweise mittels W-LAN, UMTS, 3G, GPRS oder ähnliches. Die Übertragung kann direkt zwischen dem Bearbeitungsgerät 1 und dem Endgerät des Nutzers erfolgen, wenn sich diese beispielsweise in einem gemeinsamen Datennetzwerk befinden. Des Weiteren kann die Karte 3 auch zur Wiederverwendung oder zur Ansicht auf anderen Endgeräten zwischengespeichert werden.

In der Karte 3 kann der Nutzer dann einen Ort auswählen, den das Bearbeitungsgerät 1 anfahren soll um dort beispielsweise eine punktuelle Bearbeitung durchzuführen. Dies kann beispielsweise der Bereich um einen Tisch sein, der regelmäßig zu bestimmten Uhrzeiten gereinigt werden soll. Es ist auch möglich, bestimmte Bereiche für die Vermeidung einer Bearbeitung auszuwählen, beispielsweise Bereiche des Raumes mit empfindlichen Bodenbelägen wie Echtholzparkett, die nicht von einem feuchtarbeitenden Bearbeitungsgerät 1 bearbeitet werden sollen.

### Bezugszeichenliste:

- 1: Bearbeitungsgerät
- 2: Boden
- 3: Karte
- 4: Kamera
- 5: Punkt
- 6: Höheninformation
- 7: Hindernis
- d: Abstand
- R₁: erste Raumposition
- R₂: zweite Raumposition
- α: Winkel
- β: Winkel

## Patentansprüche

1. Verfahren zur Bearbeitung, insbesondere Reinigung, eines Bodens (2) eines Raumes mittels eines selbsttätig verfahrbaren Bearbeitungsgerätes (1), wobei eine Karte (3) des Raumes erstellt und einem Nutzer des Bearbeitungsgerätes (1) angezeigt wird, wobei der Nutzer in der erstellten Karte (3) zumindest einen Teilbereich des Raumes auswählen kann, in welchem das Bearbeitungsgerät (1) eine Bearbeitung des Bodens (2) durchführen oder unterlassen soll, wobei die Karte (3) des Raumes aus dreidimensionalen Koordinaten eines Weltkoordinatensystems erstellt wird, wobei jedem Punkt (5) einer Vielzahl von Punkten (5) des Raumes und/ oder eines in dem Raum angeordneten Hindernisses (7) eine dreidimensionale Koordinate innerhalb des Weltkoordinatensystems zugeordnet wird, **dadurch gekennzeichnet, dass** die Karte (3) als zweidimensionale Karte mit kodierten, insbesondere farbkodierten, Höheninformationen (6) angezeigt wird, wobei die Höheninformation (6) eine Höheninformation (6) eines Hindernisses (7) ist, und wobei sich die Kodierungen unterschiedlich hoher Hindernisse (7) unterscheiden.

2. Verfahren nach Anspruch 1, **dadurch gekennzeichnet, dass** der Raum mittels eines an dem Bearbeitungsgerät (1) angeordneten dreidimensional schwenkbaren Laserdistanzsensors vermessen wird.

3. Verfahren nach Anspruch 1 oder 2, **dadurch gekennzeichnet, dass** der Raum mittels einer an dem Bearbeitungsgerät (1) angeordneten Kamera (4) vermessen wird.

4. Verfahren nach Anspruch 3, **dadurch gekennzeichnet, dass** ein erstes Bild der Kamera (4) von einer ersten Raumposition (R₁) des Bearbeitungsgerätes (1) aus aufgenommen wird, und dass ein zweites Bild von einer zweiten Raumposition (R₂) des Bearbeitungsgerätes (1) aus aufgenommen wird, wobei in dem ersten Bild und dem zweiten Bild enthaltene Bilddaten, insbesondere mittels einer Kantendetektion, auf eine Vielzahl von Punkten (5) und/ oder Linien reduziert werden.

5. Verfahren nach Anspruch 4, **dadurch gekennzeichnet, dass** die reduzierten Bilddaten des ersten Bildes und des zweiten Bildes miteinander verglichen werden, wobei anhand eines von dem Bearbeitungsgerät (1) zurückgelegten Abstandes (d) zwischen der ersten Raumposition (R₁) und der zweiten Raumposition (R₂) für jeden Punkt (5) und/oder jede Linie eine dreidimensionale Koordinate des Weltkoordinatensystems berechnet wird.

6. Verfahren nach Anspruch 5, **dadurch gekennzeichnet, dass** der Abstand (d) zwischen der ersten Raumposition (R₁) und der zweiten Raumposition (R₂) mittels eines an dem Bearbeitungsgerät (1) angeordneten Laserdistanzsensors, insbesondere eines Triangulationssensors, ermittelt wird.

7. Verfahren nach einem der vorhergehenden Ansprüche, **dadurch gekennzeichnet, dass** die Karte (3) als Gitterkarte oder Linienkarte angezeigt wird.

8. Verfahren nach einem der vorhergehenden Ansprüche, **dadurch gekennzeichnet, dass** die Karte (3) des Raumes mittels einer Auswerteeinrichtung des Bearbeitungsgerätes (1) erstellt wird.

9. Verfahren nach einem der vorhergehenden Ansprüche, **dadurch gekennzeichnet, dass** die Karte (3) des Raumes mittels einer Auswerteeinrichtung eines in Datenverbindung mit dem Bearbeitungsgerät (1) stehenden mobilen Endgerätes und/oder mittels einer in ein Datenkommunikationsnetzwerk eingebundenen Auswerteeinrichtung erstellt wird.

## Claims

1. A method for processing, in particular for cleaning, a floor (2) of a room using an automatically movable processing device (1), wherein a map (3) of the room is generated and displayed to a user of the processing device (1), wherein the user can select at least one sub-region of the room, in which the processing device (1) is to process or refrain from processing the floor, in the generated map (3), wherein the map (3) of the room is generated from three-dimensional coordinates of a world coordinate system, wherein a three-dimensional coordinate within the world coordinate system is assigned to each point (5) of a plurality of points (5) of the room and/or of an obstacle (7) arranged in the room, **characterized in that** the map (3) is displayed as two-dimensional map comprising coded, in particular color-coded, height information (6), wherein the height information (6) is a height information (6) of an obstacle (7), and wherein the codes of obstacles of different heights differ.

2. The method according to claim 1, **characterized in that** the room is measured using a three-dimensionally pivotable laser distance sensor, which is arranged on the processing device (1).

3. The method according to claim 1 or 2, **characterized in that** the room is measured with a camera (4) arranged on the processing device (1).

4. The method according to claim 3, **characterized in that** a first picture of the camera (4) is taken from a first room position (R₁) of the processing device (1), and that a second picture is taken from a second room position (R₂) of the processing device (1), wherein picture data contained in the first picture and the second picture are reduced to a plurality of points (5), in particular using an edge detection.

5. The method according to claim 4, **characterized in that** the reduced picture data of the first picture and of the second picture are compared to one another, wherein a three-dimensional coordinate of the world coordinate system is calculated by means of a distance (d) between the first room position (R₁) and the second room position (R₂) covered by the processing device (1) for each point (5) and/or each line.

6. The method according to claim 5, **characterized in that** the distance (d) between the first room position (R₁) and the second room position (R₂) is determined using a laser distance sensor, in particular a triangulation sensor, which is arranged on the processing device (1).

7. The method according to one of the preceding claims, **characterized in that** the map (3) is displayed as grid map or line map.

8. The method according to one of the preceding claims, **characterized in that** the map (3) of the room is generated using an evaluating unit of the processing device (1).

9. The method according to one of the preceding claims, **characterized in that** the map (3) of the room is generated using an evaluating unit of a mobile end device, which is in data connection with the processing device (1), and/or using an evaluating unit, which is integrated in a data communications network.

## Revendications

1. Procédé de traitement, en particulier de nettoyage, d'un sol (2) d'une pièce au moyen d'un appareil de traitement (1) à déplacement automatique, dans lequel une carte (3) de la pièce est établie et affichée à un utilisateur de l'appareil de traitement (1), dans lequel l'utilisateur peut sélectionner sur la carte établie (3) au moins une zone partielle de la pièce dans laquelle l'appareil de traitement (1) doit effectuer ou omettre un traitement du sol (2), dans lequel la carte (3) de la pièce est établie à partir de coordonnées en trois dimensions d'un système de coordonnées mondiales, dans laquelle une coordonnée tridimensionnelle dans le système de coordonnées mondiales est affectée à chaque point (5) d'une multiplicité de points (5) de la pièce et/ou à un obstacle (7) disposé dans la pièce, **caractérisée en ce que** la carte (3) est représentée sous la forme d'une carte bidimensionnelle avec des informations de hauteur (6) codées, en particulier selon un code de couleurs, dans lequel l'information de hauteur (6) est une information de hauteur (6) d'un obstacle (7) et dans lequel diffèrent les codages des obstacles (7) de hauteurs différentes.

2. Procédé selon la revendication 1, **caractérisé en ce que** la pièce est mesurée au moyen d'un capteur de distance laser pivotant suivant trois dimensions qui est agencé sur l'appareil de traitement (1).

3. Procédé selon la revendication 1 ou 2, **caractérisé en ce que** la pièce est mesurée au moyen d'une caméra (4) agencée sur l'appareil de traitement (1) .

4. Procédé selon la revendication 3, **caractérisé en ce qu'**une première image de la caméra (4) est prise à partir d'une première position spatiale (R₁) de l'appareil de traitement (1), et **en ce qu'**une deuxième image est prise à partir d'une deuxième position spatiale (R₂) de l'appareil de traitement (1), dans lequel les données d'image contenues dans la première image et dans la deuxième image sont réduites à une pluralité de points (5) et/ou de lignes, en particulier par une détection des arêtes.

5. Procédé selon la revendication 4, **caractérisé en ce que** les données d'image réduites de la première image et de la deuxième image sont comparées entre elles, dans lequel une coordonnée tridimensionnelle du système de coordonnées mondiales est calculée pour chaque point (5) et/ou chaque ligne sur la base d'une distance (d) couverte par le dispositif de traitement (1) entre la première position spatiale (R₁) et la deuxième position spatiale (R₂).

6. Procédé selon la revendication 5, **caractérisé en ce que** la distance (d) entre la première position spatiale (R₁) et la deuxième position spatiale (R₂) est déterminée au moyen d'un capteur de distance laser, en particulier un capteur de triangulation, disposé sur l'appareil de traitement (1).

7. Procédé selon l'une des revendications précédentes, **caractérisé en ce que** la carte (3) est représentée sous la forme d'une carte quadrillée ou d'une carte à lignes.

8. Procédé selon l'une des revendications précédentes, **caractérisé en ce que** la carte (3) de la pièce est établie au moyen d'un dispositif d'analyse de l'appareil de traitement (1).

9. Procédé selon l'une des revendications précédentes, **caractérisé en ce que** la carte (3) de la pièce est établie au moyen d'un dispositif d'analyse d'un terminal mobile qui est en liaison de données avec l'appareil de traitement (1) et/ou au moyen d'un dispositif d'analyse qui est relié à un réseau de communication de données.
